# EUROPEAN PATENT APPLICATION

(11) **EP 4 686 427 A1**
(43) Date of publication of application: **04.02.2026**
(21) Application number: 25191213.5
(22) Date of filing: 23.07.2025
(51) Int. Cl.: A43D 25/07, B29D 35/12, B29D 35/14

(54) **SYSTEM FOR AUTOMATICALLY PRESSING A FOOTWEAR SOLE AND UPPER**

(30) Priority: 02.08.2024 IT 202400018169
(71) Applicant: Irocol S.r.l., 62012 Civitanova Marche (MC) (IT)
(72) Inventor: PAOLUCCI, Alessandro, 62012 Civitanova Marche (MC) (IT)
(74) Representative: Baldi, Claudio

(57) **Abstract**

A machine for automatically pressing a footwear sole and upper, comprising a pressure bell (100) having a body (1) with a chamber (14) that houses a membrane (2); said body (1) comprising at least one lower hole (15a, 15b), a front hole (16) and a rear hole (17); said machine comprising a hydraulic system (I) connected to the pressure bell (100) and a vacuum pump (3) connected to said at least one lower hole (15a, 15b) of the pressure bell for sucking the air from the chamber (14) of the pressure bell, and a pressure pump (4) connected to said at least one lower hole (15a, 15b) and to the front and rear holes (16, 17) of the pressure bell to feed compressed air into the chamber (14) of the pressure bell.

## Description

The present invention relates to a process for automatically pressing a footwear sole and upper, and to a machine used to implement such a process.

The field of reference is that of footwear provided with a box sole. A box sole is a sole that is shaped like a tray and comprises a perimeter edge where the upper of the shoe is attached. Box soles are mainly used in sneakers and leisure shoes in general, and in all footwear models that require a very good strength, reducing the risk of the upper being detached from the sole.

In many models of shoes the upper is glued to the sole with hot glue. For such a purpose, a membrane press is known, comprising an aluminum pressure bell containing a rubber membrane suitable for being deformed under pressure, assuming the shape of the shoe, in such a way to uniformly press the sole against the upper and glue the sole to the upper.

The pressure bell has an internal chamber suitable for operating in vacuum condition (at an absolute pressure from 0.2 bar to 0.8 bar approximately) by sucking the air, and in pressurized condition by introducing compressed air. Such an internal chamber is closed by an upper lid. The rubber membrane is arranged in the internal chamber of the pressure bell. The rubber membrane has the same shape as the shoe and is substantially similar in size to the shoe to be worked.

The use of such a membrane press of known type provides for creating a vacuum in the internal chamber of the bell in order to expand the rubber membrane and easily introduce the shoe in the rubber membrane, preventing a contact between the rubber membrane and the shoe.

After positioning the shoe in the rubber membrane, the upper lid of the pressure bell is closed and the first step of the work cycle begins. Such a first step provides for opening a pneumatic valve to slowly introduce air in the internal chamber of the bell until the atmospheric pressure is reached in the internal chamber of the bell. In this way, the press exploits the elastic return of the rubber membrane to bring the rubber membrane back to its original shape and let the rubber membrane to slowly and progressively approach the shoe.

At the end of the first step, a second step of the work cycle begins. Such a second step of the work cycle provides for introducing pressurized air in the inner chamber of the bell (up to 7 bar) by means of a valve, so that the rubber membrane is deformed, assuming the shape of the shoe. In this way, the rubber membrane presses the shoe, ensuring a uniform gluing of the sole to the upper.

At the end of the second step, the valves are discharged and the air is evacuated from the internal chamber of the bell. Simultaneously, a Venturi pump is activated to bring the internal chamber of the bell back to a pressure value that allows to open the upper lid of the bell and extract the shoe.

Such a membrane press of known type is impaired by some drawbacks.

Said drawbacks are encountered during the first step of the work cycle when, after the transition from vacuum to atmospheric pressure in the chamber of the bell, the rubber membrane returns to its initial shape and adheres to the shoe being worked. In particular, during the adhesion of the rubber membrane to the shoe, the sole is often displaced relative to the upper.

In fact, the first step of the work cycle lasts about 4-5 seconds, i.e. for a period of time that is sufficient to assemble the sole and the upper, but at the same time is too long to prevent the risk of an accidental displacement between the sole and the upper.

Such a displacement between the sole and the upper is also favored by the fact that, during the first step of the work cycle, the hot glue has not yet set and is therefore unable to hold the sole in position relative to the upper.

The purpose of the present invention is to overcome the drawbacks of the prior art by providing a system for automatically pressing a footwear sole and upper that is capable of maintaining the correct mutual position between the sole and the upper, without the risk of displacing the sole and the upper during the work cycle.

Another purpose is to provide such a system for automatically pressing a footwear sole and upper that is efficient, reliable, and easy to implement.

These purposes are achieved in accordance with the invention with the features listed in the attached independent claim 1.

Advantageous embodiments appear from the dependent claims.

The machine according to the invention is defined by claim 1.

For greater clarity, the description of the machine according to the invention continues with reference to the attached drawings, which are for illustrative purposes only and not limiting, wherein:
Fig. 1 is a perspective view of a pressure bell of the machine according to the invention;
Fig. 2 is a perspective view of the bell of Fig. 1, seen from a different angle;
Fig. 3 is a longitudinal sectional view of the bell of Fig. 1;
Fig. 4 is a block diagram illustrating the steps of the process according to the invention;
Figs. 5 and 6 are the same views as Fig. 3, except for they illustrate a shoe arranged in the membrane during a vacuum creation step and a pressure step, respectively.

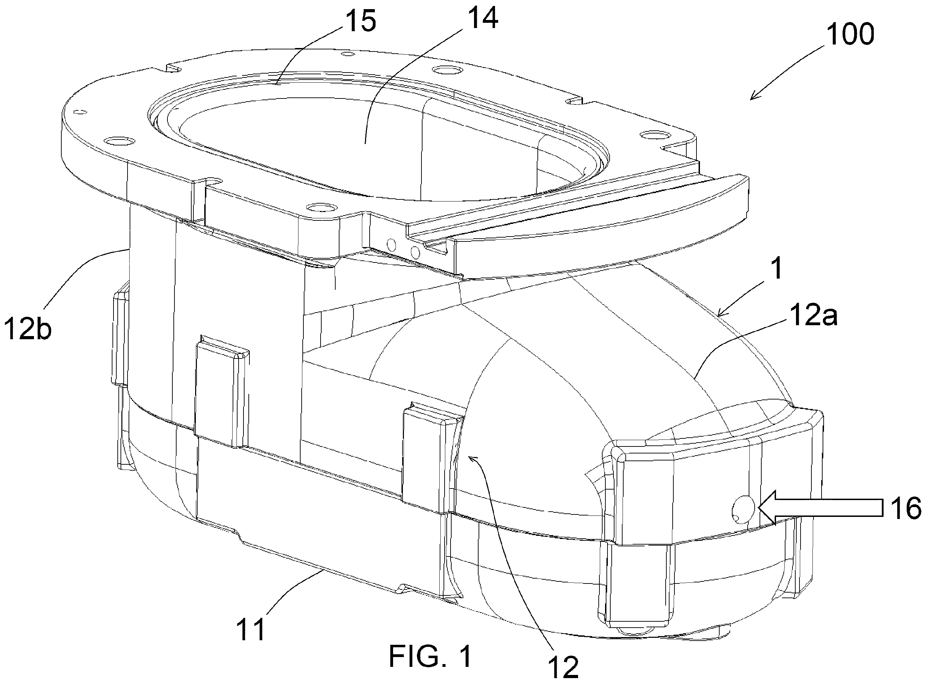

With reference to Figs. 1 to 3, a pressure bell of a machine according to the invention, which is comprehensively indicated with reference numeral 100, is described.

The pressure bell (100) comprises a body (1) and a membrane (2).

The body (1) of the pressure bell has a shape that advantageously reproduces the shape of a shoe and has a bottom wall (11) and a side wall (12) rising from the bottom wall (11). The bottom wall (11) and the side wall (12) of the body (1) define a chamber (14) accessible from the outside through an upper opening (15). A lid (S) is mounted on the body (1) to open and close the upper opening (15).

The side wall (12) of the body (1) of the pressure bell comprises a front portion (12a) suitable for being positioned at the toe of a shoe to be worked, and a rear portion (12b) suitable for being positioned at the heel of the shoe to be worked.

The membrane (2) is made of a single rubber piece and is arranged inside the chamber (14) of the body (1).

The chamber (14) of the body (1) of the pressure bell is suitable for operating in vacuum condition by sucking the air, and in pressurized condition by introducing compressed air.

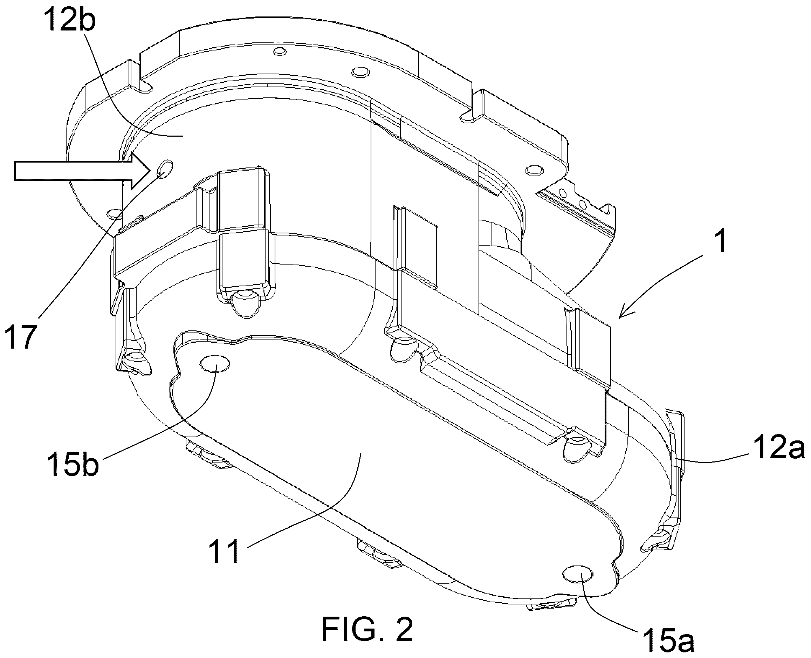

With reference to Fig. 2, the body (1) of the pressure bell comprises at least one lower hole (15a, 15b) formed on the bottom wall (11) of the body. As shown in Fig. 2, the bottom wall (11) of the body (1) advantageously comprises a first lower hole (15a) formed in the vicinity of the front portion (12a) of the side wall (12) of the body, and a second lower hole (15b) formed in the vicinity of the rear portion (12b) of the side wall (12) of the body.

With reference to Fig. 1, the body (1) of the pressure bell also comprises a front hole (16) formed at the front portion (12a) of the side wall (12) of the body.

Going back to Fig. 2, the body (1) of the pressure bell comprises a rear hole (17) formed at the rear portion (12b) of the side wall (12) of the body.

The front hole (16) and the rear hole (17) are formed on the side wall (12) at the same height with respect to the bottom wall (11) of the body of the bell.

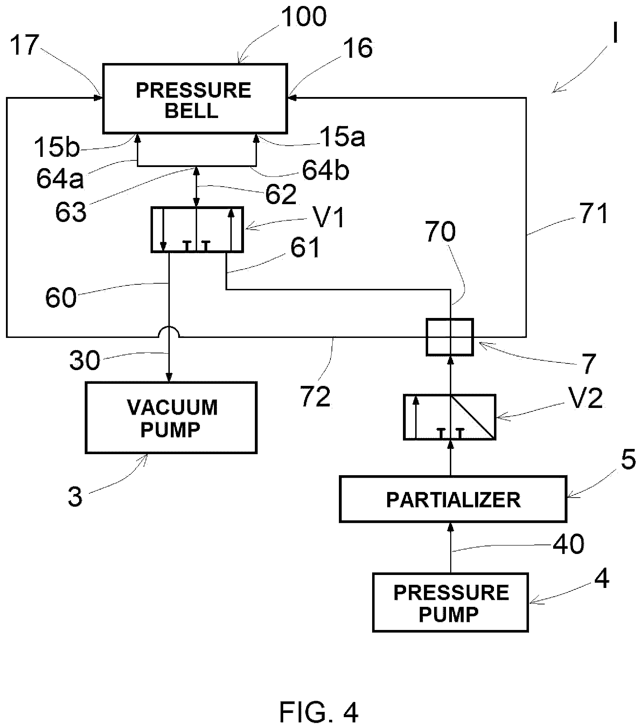

Fig. 4 illustrates a hydraulic system (I) connected to the pressure bell (100).

The hydraulic system (I) comprises a vacuum pump (3) and a pressure pump (4).

The vacuum pump (3) is connected to the lower holes (15a, 15b) of the pressure bell to suck the air from the chamber (14) of the body (1) of the pressure bell. The pressure pump (4) is connected to the lower holes (15a, 15b) and to the front and rear holes (16, 17) of the pressure bell to feed compressed air into the chamber (14) of the body (1) of the pressure bell.

A three-way valve (V1) has a first way (60) connected to a suction duct (30) of the vacuum pump (3), a second way (61) connected to a delivery duct (40) of the pressure pump (4), and a third way (62) connected to a branch fitting (63) that is branched off into two ducts (64a, 64b), respectively leading to the two lower holes (15a, 15b) of the pressure bell.

The three-way valve (V1) may provide a connection between the first way (60) and the third way (62) to create a vacuum in the chamber (14) of the body of the pressure bell, or it may provide a connection between the second way (61) and the third way (62) to create pressure in the chamber (14) of the body of the pressure bell.

A second branch (7) is arranged in the delivery duct (40) of the pressure pump (4) to branch off the delivery duct (40) into a first conduit (70) connected to the second way (61) of the three-way valve, a second conduit (71) connected to the front hole (16) of the bell, and a third conduit (72) connected to the rear hole (17) of the bell.

A two-way valve (V2) is arranged in the delivery duct (40) of the pressure pump to enable the delivery of pressurized air.

When pressure is to be created, the two-way valve (V2) opens and the pressurized air flows into the conduits (70, 71, 72). The three-way valve (V1) enables the connection between the second way (61) and the third way (62) so that the pressurized air reaches the lower holes (15a, 15b) of the bell and the front and rear holes (16, 17) of the bell.

A partializer (5) may be arranged in the delivery duct (40) of the pressure pump to regulate the pressure of the air fed into the chamber (14) of the body of the pressure bell.

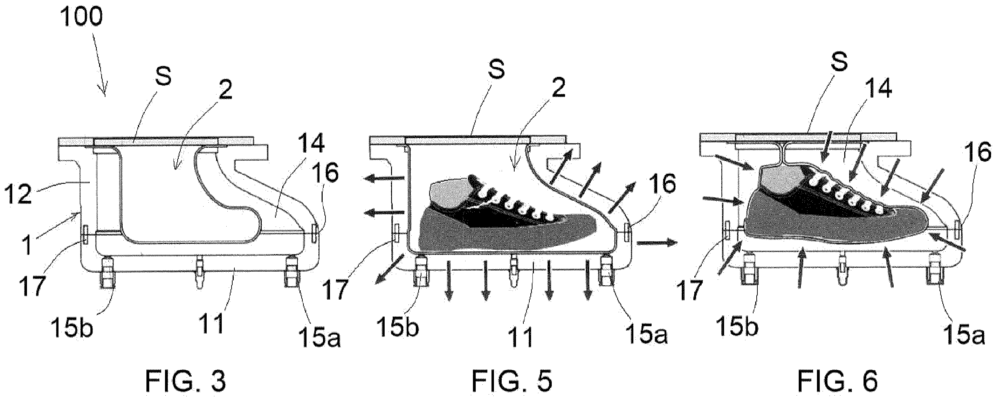

With reference to the hydraulic system of Fig. 4 and to Figs. 5 and 6, the pressing process according to the invention is described.

Initially, the three-way valve (V1) enables the connection between the first way (60) and the third way (62), so as to suck the air from the chamber (14) of the body of the pressure bell through the lower holes (15a, 15b) of the body of the pressure bell, and create a vacuum in said chamber (14). In this way, the membrane (2) arranged in the chamber (14) of the body of the pressure bell is expanded until it adheres to the inner surface of the bottom wall (11) and of the side wall (12) of the body of the pressure bell, forming a bag that is open at the top, as shown in Fig. 5. The shoe to be worked is positioned inside the bag formed by the membrane (2).

The lid (S) is closed and the three-way valve (V1) switches its state, enabling the connection between the second way (61) and the third way (62). Therefore, the two-way valve (V2) opens and the pressurized air flows into the conduits (70, 71, 72) and is fed into the chamber (14) of the body of the pressure bell through the lower holes (15a, 15b) and the front and rear holes (16, 17) of the bell. The partializer (5) regulates the pressure of the air fed into the bell to 1-2 bar, preferably 1.5 bar, for a time comprised between 1 and 2 seconds. In this way, the membrane (2) approaches the shoe rapidly, in such a short time that it is not sufficient to cause the mutual displacement between the sole and the upper. Furthermore, the introduction of pressurized air into the chamber of the bell through the lower holes (15a, 15b) and also through the front and rear holes (16, 17) of the bell causes the membrane to adhere to the shoe, exerting a light pressure on the shoe inferiorly, anteriorly and posteriorly, and ensuring that the sole and the upper are properly held in the correct position.

Subsequently, the partializer increases the pressure of the air fed into the bell to 6-8 bar, preferably to 7 bar, in such a way to perform the pressing operation between the sole and the upper, allowing a uniform and correct gluing between the sole and the upper, as shown in Fig. 6.

At the end of the pressing operation, the two-way valve (V2) is closed and a Venturi pump is activated to bring the internal chamber of the bell back to a pressure value that allows the lid (S) of the bell to be opened and the shoe to be extracted from the membrane (2).

Numerous modifications can be made to the present embodiment of the invention, which are within the reach of an expert of the field and fall in any case in the scope of the invention as expressed in the accompanying claims.

## Claims

1. Machine for automatically pressing a footwear sole and upper; wherein said machine comprises a pressure bell (100) comprising a body (1) defining a chamber (14) wherein a membrane (2) is arranged;
said body (1) of the pressure bell comprising:
- a bottom wall (11) with at least one lower hole (15a, 15b),
- a side wall (12) rising from the bottom wall (11) so as to define said chamber (14), with an upper opening (15);
- a lid (S) for opening and closing the upper opening (15);
said side wall (12) of the body of the pressure bell comprising:
- a front portion (12a) suitable for being positioned at the toe of a shoe to be worked,
- a front hole (16) formed in the front portion (12a) of the side wall (12) of the body;
- a rear portion (12b) suitable for being positioned at the heel of the shoe to be worked; and
- a rear hole (17) formed in the rear portion (12b) of the side wall (12) of the body;
said machine further comprising a hydraulic system (I) connected to the pressure bell (100); wherein said hydraulic system (I) comprises:
- a vacuum pump (3) comprising a suction duct (30) connected to said at least one lower hole (15a, 15b) of the pressure bell for sucking the air from the chamber (14) of the body (1) of the pressure bell, and
- a pressure pump (4) comprising a delivery duct (40) connected to said at least one lower hole (15a, 15b) and to the front and rear holes (16, 17) of the pressure bell for feeding compressed air into the chamber (14) of the body (1) of the pressure bell;
wherein the body (1) of the pressure bell (100) comprises a first lower hole (15a) formed in the vicinity of the front portion (12a) of the side wall (12) of the body, and a second lower hole (15b) formed in the vicinity of the rear portion (12b) of the side wall (12) of the body; and
wherein the hydraulic system (I) comprises:
- a three-way valve (V1) having a first way (60) connected to the suction duct (30) of the vacuum pump (3), a second way (61) connected to the delivery duct (40) of the pressure pump (4), and a third way (62) connected to a branch fitting (63) that is branched off into two ducts (64a, 64b) respectively leading to the two lower holes (15a, 15b) of the pressure bell;
said three-way valve (V1) being configured to enable a connection of the first way (60) with the third way (62) to create vacuum in the chamber (14) of the body of the pressure bell or a connection of the second way (61) with the third way (62) to create pressure in the chamber (14) of the body of the pressure bell.

2. The machine according to claim 1, wherein the hydraulic system (I) further comprises:
- a second branch (7) arranged in the delivery duct (40) of the pressure pump (4) to branch off the delivery duct (40) into a first conduit (70) connected to the second way (61) of the three-way valve, a second conduit (71) connected to the front hole (16) of the bell, and a third conduit (72) connected to the rear hole (17) of the bell; and
- a two-way valve (V2) arranged in the delivery duct (40) of the pressure pump to enable the delivery of pressurized air.

3. The machine according to claim 1 or 2, wherein the hydraulic system (I) comprises a partializer (5) arranged in the delivery duct (40) of the pressure pump to regulate the pressure of the air fed into the chamber (14) of the body of the pressure bell.

4. The machine according to any of the preceding claims, wherein the membrane (2) is made of a single rubber piece.

5. The machine according to any of the preceding claims, wherein the front hole (16) and the rear hole (17) are formed on the side wall (12) of the body (1) of the pressure bell at the same height with respect to the bottom wall (11) of the body (1) of the pressure bell.

6. Process for automatically pressing a footwear sole and upper using the machine according to any of the preceding claims, wherein said process comprises the following steps:
- sucking the air from the chamber (14) of the body of the pressure bell through said at least one lower hole (15a, 15b) of the body of the pressure bell, so as to create vacuum in said chamber (14) of the body of the pressure bell and expand the membrane (2) arranged in the chamber (14) of the body of the pressure bell, in such a way that the membrane (2) adheres to an inner surface of the bottom wall (11) and of the side wall (12) of the body of the pressure bell, forming a bag that is open at the top;
- positioning a shoe to be worked in the bag formed by the membrane (2);
- closing the lid (S);
- introducing pressurized air into the chamber (14) of the body of the pressure bell through said at least one lower hole (15a, 15b) and the front and rear holes (16, 17) of the pressure bell, so that the membrane (2) adheres to the shoe and exerts a pressure on the shoe inferiorly, anteriorly and posteriorly,
- activating a Venturi pump to bring the chamber (14) of the body of the pressure bell back to a pressure value that allows the lid (S) of the pressure bell to be opened and the shoe to be extracted from the membrane (2);
wherein said step of feeding pressurized air into the chamber (14) of the body of the pressure bell provides for:
- feeding air into the bell at a low pressure of 1-2 bar for a time comprised between 1 and 2 seconds, so that the membrane (2) approaches the shoe quickly, and
- increasing the pressure of the air fed into the pressure bell up to 6-8 bar, so as to press the sole and upper together; and
wherein said step of sucking the air from the chamber (14) of the body (1) of the pressure bell provides that the three-way valve (V1) enables the connection between the first way (60) and the third way (62).

7. The process according to claim 6, wherein said step of feeding pressurized air into the chamber (14) of the body of the pressure bell provides that the three-way valve (V1) enables the connection between the second way (61) and the third way (62).
